# EUROPEAN PATENT SPECIFICATION

(11) **EP 0 947 719 B1**
(45) Date of publication and mention of the grant of the patent: **28.05.2003**
(21) Application number: 99400800.1
(22) Date of filing: 01.04.1999
(51) Int. Cl.: F16D 7/02, B62D 5/04

(54) **Power steering system**
Servolenksystem
Système de direction assistée

(30) Priority: 03.04.1998 JP 9197198; 18.09.1998 JP 26556098
(43) Date of publication of application: 06.10.1999
(73) Proprietor: Mitsuba Corporation, Kiryu-shi, Gunma-ken (JP)
(72) Inventor: Furuuchi, Hideki, Isezaki-shi, Gunma-ken (JP); Ishikura, Satoshi, Kiryu-shi, Gunma-ken (JP)
(74) Representative: Bérogin, Francis

(56) References cited:
- GB-A- 2 297 000
- US-A- 1 505 480
- PATENT ABSTRACTS OF JAPAN vol. 1997, no. 07, 31 July 1997 (1997-07-31) & JP 09 084300 A (MITSUBISHI ELECTRIC CORP), 28 March 1997 (1997-03-28)

## Description

### BACKGROUND OF THE INVENTION

### 1. Field of the Invention

The present invention relates to a power steering system for generating an auxiliary steering force for the steering of a vehicle such as a four-wheel-drive car or the like.

This application is based on Patent Applications Nos. Hei 10-91971 and Hei 10-265560 filed in Japan.

### 2. Description of the Related Art

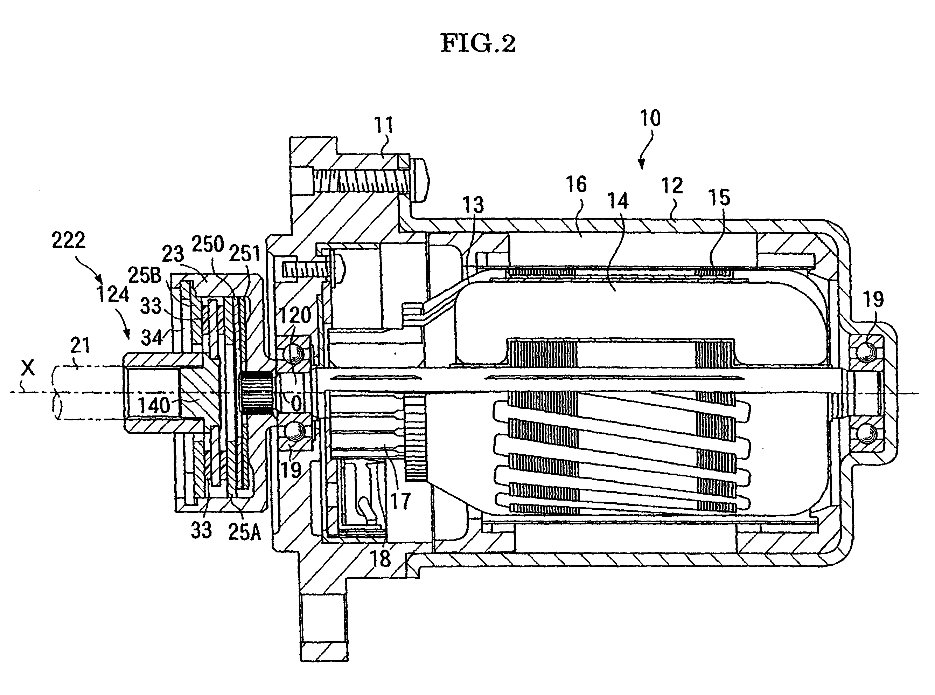

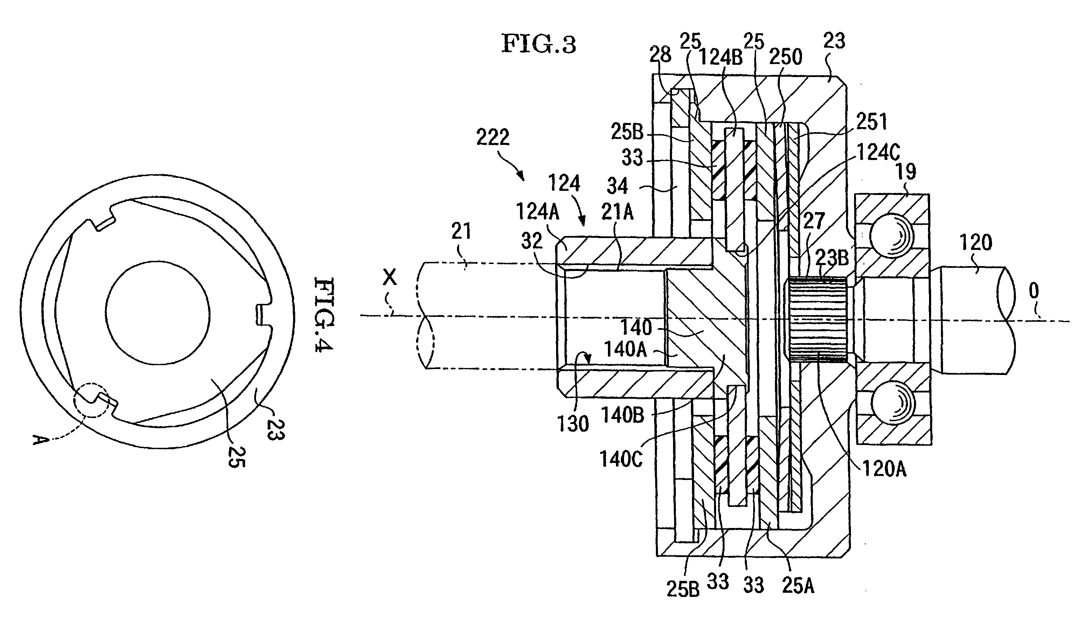

Figs. 2 and 3 show an example of a power steering system, in which output shaft 120 of driving unit (i.e., motor) 10 for generating the above auxiliary steering force and input shaft 21 coupled to the steering unit of a vehicle (not shown) are coupled via torque limiter 222.

Driving unit 10 corresponds to a conventional DC motor which includes bracket 11, yoke 12, armature 13, coil 14, core 15, magnet 16, commutator 17, brush 18, bearing 19, and output shaft 120.

The torque limiter 222 comprises limiter cover 23 fixed in a manner such that the cover is rotationally driven together with the output shaft 120, limiter plate 124 fixed in a manner such that the plate is rotationally driven together with the input shaft 21, a pair of cover disks (i.e., friction plates) 25A and 25B as a facing unit 25 for pressing the limiter plate 124 to the limiter cover 23 so as to integrally rotate the plate 124 and cover 23 by generated friction, and coned disk spring 250 and washer 251 provided in contact with the bottom plate of the limiter cover.

The limiter plate 124 consists of cylindrical portion 124A and flange portion 124B, which are combined via metal bush 140.

The bush 140 consists of smaller-diameter portion 140A inserted into the cylindrical portion 124A, and larger-diameter portion 140B combined with the flange portion 124B. In the larger-diameter portion 140B, circular fitting portion 140C is formed with respect to the center axis of cylindrical portion 124A (in Fig. 3, this center axis aligns with center axis X).

Mounting hole 124C is made at a center portion of flange portion 124B so as to attach the flange portion to bush 140, and on the inner-peripheral area (corresponding to the inner diameter) of this hole, concave-convex splines are provided in order to firmly maintain the coupling condition between the flange portion 124B and bush 140.

The assembling process is as follows: bush 140 as a "cap" is clamped to the above mounting hole 124C of flange portion 124B in a manner such that the edge of the flange portion 124B at the hole 124C side is fit in the circular fitting portion 140C, and then the bush 140 is pressed and fixed into cylindrical portion 124A. The bush 140 also functions as a cap for preventing grease, which was applied to the input shaft 21 where splines are provided as explained later, from entering into the friction faces of facing unit 25 and influencing the sliding torque.

In this structure, the cylindrical portion 124A having the splines and the flange portion 124B which must have a suitable accuracy for functioning as a friction clutch, are separately formed. Therefore, efficient manufacturing is possible in consideration of accuracy requirements relating to formation of each portion.

Here, in the inner surface 130 of the cylindrical portion 124A, multiple spline grooves 32 extending in parallel with the center axis of limiter plate 124, that is, the axis X of the input shaft 21, are provided with equal spaces ensured in a circumferential line. On the other hand, at the end portion of the input shaft 21, multiple splines 21A engaged with the above spline grooves 32 extend in parallel with the axis X. That is, input shaft 21 is inserted into the cylindrical portion 124A by engaging these splines 21A with the-spline grooves 32, by which the limiter plate 124 is mounted to the input shaft 21 such that the plate 124 can integrally rotate with input shaft 21 around axis X and can move freely in the direction of axis X relative to input shaft 21.

On the other hand, multiple spline grooves 27 extending in parallel with axis O of the output shaft 120 are provided in the outer-peripheral area of portion 120A which projects from the bracket 11 of the driving unit 10. The limiter cover 23 is cylindrically shaped and has a bottom, and is made of a light metallic material such as aluminum. At the center of the bottom plate of cover 23, mounting hole 23B is provided along the central axis of limiter cover 23. By pressing the above projecting portion 120A of output shaft 120 into the mounting hole 23B, the above spline grooves 27 are cut into the inner wall of mounting hole 23B, and the limiter cover 23 is attached so as to be coaxial and rotatable together with (the axis O of) the output shaft 120.

Each of the pair of cover disks 25A and 25B is formed like a disk whose diameter is determined for enabling insertion of the disk into the cylindrical portion of limiter cover 23. Convex fitting portions (not shown) of each cover disk are fit to concave fitting portions (also not shown) provided in the limiter cover 23, by which the cover disks 25A and 25B are contained in limiter cover 23 such that these disks can rotate integrally with the limiter cover 23 and can move freely in the direction of axis O.

Disk-shaped facing materials 33 respectively adhere to the end faces (which face each other) of these cover disks 25A and 25B, each facing material and corresponding end face closely contacting each other. For example, these facing materials are formed by compression-molding a mixture of a fibrous material and a phenolic resin. In addition, on each face (of facing materials 33) contacting flange portion 124B of limiter plate 124, a plurality of grooves are provided in the radial directions, the depth of each groove being approximately half of the thickness of facing material 33. These grooves function as "escape" grooves for abrasion particles.

In addition, C-ring 34 is inserted into circular groove 28 provided near the opening side of limiter cover 23. As the C-ring 34, a snap ring, inserted into a hole, as specified in JIS (Japanese Industrial Standard) B 2804, or a concentric snap ring, inserted into a hole, as specified in JIS B 2806, may be used. The inner diameter of the C-ring is smaller than the inner diameter of the cylindrical portion of limiter cover 23. By putting such C-ring 34 into the above circular groove 28 in a form having a slightly reduced diameter, the C-ring is elastically forced toward the "expanding" directions and is fixed inside limiter cover 23.

According to the above structure, the limiter plate 124 functioning as the rotated member of the present invention is forced by the pressing force of the coned disk spring 250 towards the bottom side of the limiter cover 23 as a corresponding rotating member, thereby generating friction between the limiter plate 124 and facing unit 25 and transmitting the motor torque.

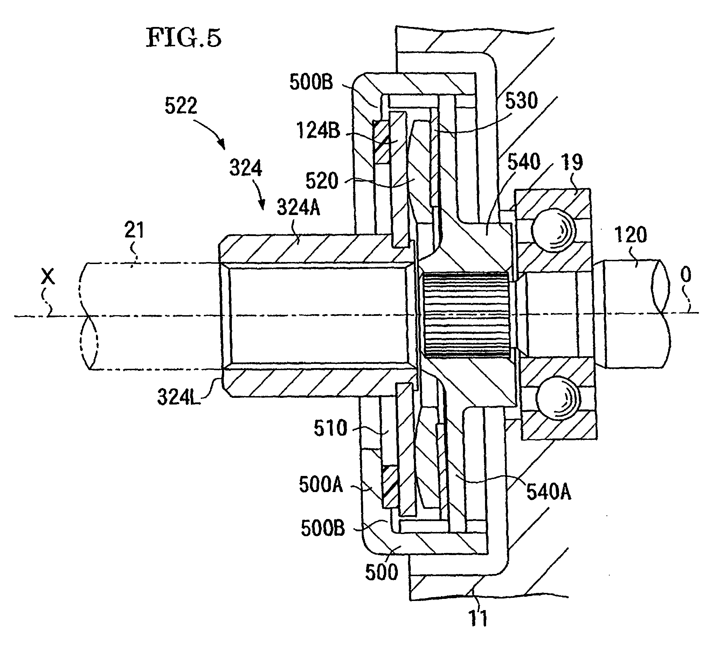

This arrangement has the following problems.
(1) After the limiter cover 23 is pressed into the motor, that is, driving unit 10, the limiter cover 23 is combined with the torque limiter 222 and measurements and adjustments relating to wear and sliding torque are performed. Therefore, the total production line must be long, and the flexibility of the above measurements and adjustments may be limited.
(2) A bush 140 for blocking grease which affects the sliding torque is provided, thereby increasing the number of structural elements. If the amount of outflowing grease is sufficiently small, an arrangement without the bush is also possible.
(3) When the motor torque, that is, the motive power from the armature 13, is transmitted from the limiter cover 23 to the facing unit 25, some portions for fitting structural elements become unsteady. For example, the portion indicated by dotted circle A in Fig. 4, which is a view (observed from the input shaft 21 side) showing the positional relationship between the facing unit 25 and the limiter cover 23, tends to be unsteady. In addition, the flange portion 124B of limiter plate 124 is put between the two cover disks 25A and 25B which are the constituents of the facing unit 25, and thus the power transmission paths are provided at both sides of the flange portion 124B. In this case, it is difficult for the power to be directly transmitted to the limiter plate.
(4) Many structural elements are stacked; thus, the distance from the face to which the torque limiter is fixed at the driving unit 10 side to the head of the limiter plate 124 has considerable dispersion due to pressure caused by such a piling structure.

### SUMMARY OF THE INVENTION

In consideration of the above circumstances, the objective of the present invention is to provide a power steering system, the torque limiter of which has a structure having a superior power-transmitting efficiency, and by which the sliding torque can be easily and accurately determined. Another objective of the present invention is to provide a power steering system, the torque limiter of which has a structure having less dispersion.

In order to realize the above objectives, the present invention provides a power steering system in which an output shaft of a driving unit and an input shaft of a steering unit are coupled via a torque limiter, the torque limiter comprising: a cylindrical case; a base, combined with the case, having an axial hole into which the output shaft is pressed and inserted; a rotated member which is rotatable together with the input shaft; and a forcing member, provided between the base and the rotated member, for generating a pressing force due to friction, wherein the torque limiter is combined with the driving unit by pressing and inserting the output shaft into the axial hole of the base.

Typically, the base has a disk-shaped portion around the axial hole, and the rotated member has a disk-shaped portion which faces the disk-shaped portion of the base via the forcing member. In addition, the forcing member may comprise a coned disk spring, and a sliding material which transmits a load received from the coned disk spring.

According to the present invention, the torque limiter of the power steering system has an assembled unit, and this assembled unit is pressed into the driving unit. Therefore, before the unit is attached to the driving unit, it is possible to temporarily fix the base and to perform adjustments relating to wear, sliding torque, or the like, only for this assembly unit, and to reduce the length of the production line.

In addition, the power transmission path is defined only in the direction from the rotated member towards the driving unit. Therefore, the sliding torque can be easily determined and the motive power from the armature can be directly and much easily transmitted via the base to the rotated member.

Preferably, the sliding material has a coefficient of friction selected such that effects on the sliding torque from grease entering from the input shaft side can be ignored. Accordingly, even if the grease outflows, a conventional bush functioning as a cap is unnecessary.

The sliding material may be disk-shaped and has a curved surface, and the curved surface may contact the rotated member on a curvilinear locus. In this case, it is possible to prevent a change of the contact state of the face (which contacts the rotated member) from affecting sliding torque.

The outer-peripheral area of the disk-shaped portion of the base may have threaded grooves, and the corresponding inner-peripheral area of the case may have threaded grooves. In this case, the base can be attached to the case by screwing the base into the case so that both grooves of the base and case are engaged. In this case, the sliding friction is variable through adjustment of the number of turns.

The end portion of the cylindrical case at the input shaft side may have a disk-shaped portion, and a friction material may be put between this disk-shaped portion and the disk-shaped portion of the rotated member. In this case, the friction material can be directly fixed to the case which rotates together with the output shaft; thus, there are no unsteady portions (as those in the conventional structure, explained in the above problem (3)).

The rotated member may have a cylindrical portion into which the input shaft is inserted and the pressing and inserting operation of the output shaft into said cylindrical portion can be performed by inserting a push pin from the end portion of the cylindrical portion at the input shaft side and pushing the base towards the output shaft side. In this case, the head of the limiter plate can be defined as a reference position, and the dispersion of the distance to the face of the driving unit (to which the assembly is fit) can be decreased by pushing the push pin by a predetermined distance from the reference position.

Therefore, according to the present invention, it is possible to realize a power steering system, the torque limiter of which has a structure having a superior power-transmitting efficiency, and by which the sliding torque can be easily and accurately determined.

### BRIEF DESCRIPTION OF THE DRAWINGS

Fig. 1 is a sectional view showing the torque limiter (522) as an embodiment according to the present invention.
Fig. 2 is a sectional view showing a conventional power steering system.
Fig. 3 is an enlarged sectional view showing the torque limiter (222) of the conventional system shown in Fig. 2.
Fig. 4 is a schematic front view of the torque limiter (222) of the conventional system shown in Fig. 3, observed from the input shaft 21 side, explaining the positional relationship between facing unit 25 and limiter cover 23.
Fig. 5 is a sectional view showing the torque limiter as a variation of the above embodiment.
Fig. 6 is a sectional view showing the torque limiter as another variation of the above embodiment.

### DESCRIPTION OF THE PREFERRED EMBODIMENTS

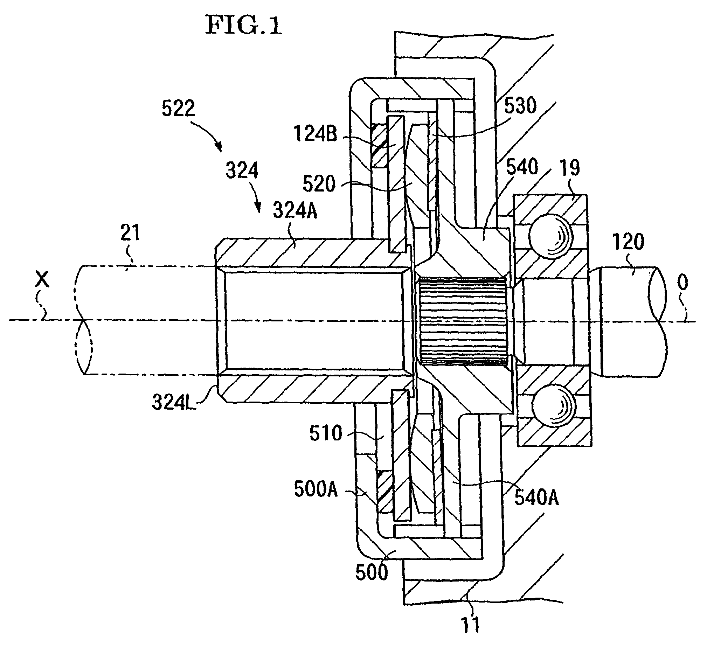

Fig. 1 is a sectional view showing the torque limiter (522) of the power steering system of an embodiment according to the present invention. In the figure, parts identical to those in Figs. 2 and 3 are given identical reference numerals, and explanations thereof are omitted.

In Fig. 1, reference numeral 500 indicates a cylindrical case without a bottom at the output shaft 120 side, and the input shaft 21 side of the case 500 has a disk-shaped edge 500A of a specific width.

In the assembly process of the present embodiment, flange portion 124B of limiter plate 324 is disposed at the back-face side of edge 500A of case 500 via disk-shaped facing material 510 as a friction material, and further via disk-shaped sliding material 520 and coned disk spring 530, base 540 is attached to case 500. That is, a pressing force is generated between the limiter plate 324 and base 540 via the disk-shaped sliding material 520 and the coned disk spring 530, and the friction generated causes integral rotation of the limiter plate 324 and the base 540. In this structure, the facing material 510 adheres and is fixed to case 500 which rotates together with the output shaft 120; thus, there are no unsteady portions (as those in the conventional structure, explained in the above problem (3)).

Base 540 has a shape in which disk-shaped portion 540A is provided around its center portion which is pressed into the driving unit side (simultaneously, to which the head portion of output shaft 120 is inserted). The base 540 is mounted to case 500 through a process in which grooves are threaded on both the outer-peripheral area of disk-shaped portion 540A and the corresponding inner-peripheral area of case 500, and then base 540 is screwed into case 500. Sliding friction is variable through adjustment of the number of turns of the base.

In addition, the adjusted sliding friction can be certainly maintained by providing notch portions in the outer-peripheral area of the disk-shaped portion 540A, and clamping and fixing the case 500 side to these notch portions after the number of turns of the base is adjusted.

Sliding material 520 functions so as to transmit a load received from the coned disk spring 530 to flange portion 124B of limiter plate 324, and thus relates to sliding between coned disk spring 530 and limiter plate 324. Therefore, a material, which can maintain its original shape for a long time even though it receives the load of the coned disk spring, is used for the sliding material 520. Here, a metallic material is used; however, a resin suitable for the above conditions may also be used. In addition, a material having a small coefficient of friction µ, as a result of which effects on the sliding torque can be ignored if grease enters from the input shaft side, is used for the sliding material 520. Therefore, even if the grease outflows, a conventional bush (140) functioning as a cap is unnecessary. Here, the shape of the sliding material 520 is not limited if the material can transmit the load of the coned disk spring 530 to the flange portion 124B, and if coefficient of friction µ at the contact portion between the material and the flange portion 124B is sufficiently small to be ignored.

In the above structure, the cylindrical portion and the flange portion of the limiter plate 324 are separately formed. Therefore, efficient manufacturing is possible even considering the accuracy requirements relating to the formation of each portion, as described above. However, if such accuracy requirements are not so stringent, these portions may be integrally formed.

It is preferable for the face of sliding material 520, which contacts flange portion 124B of limiter plate 324, to have a curved surface and contact the flange portion on a curvilinear locus, as shown in Fig. 1, so as to prevent a change of the contact state of the face, which contacts with flange portion 124B, from affecting the sliding torque.

In addition, facing material 510 may adhere to the back face of edge 500A of case 500, or may not adhere when the back face of edge 500A is made rough.

In the present embodiment, the unit assembled as described above is pressed into the driving unit (i.e., motor) side. This pressing operation is performed by inserting a push pin along the inner-peripheral surface (i.e., spline surface) of the cylindrical portion 324A of limiter plate 324 and directly pushing the base 540. Here, head position 324L of the limiter plate 324 may be defined as a reference position, and the dispersion of the distance to the face of the driving unit 10 (to which the assembly is fit) can be decreased by pushing the push pin by a predetermined distance from the reference position.

Accordingly, before the process for attaching the assembly unit to the driving unit, it is possible to temporarily fix the base 540 and to perform adjustments relating to wear, sliding torque, or the like, only for this assembly unit, and to reduce the length of the production line.

In the conventional structure as shown in Fig. 3, the flange portion 124B of limiter plate 124 is put between two cover disks 25A and 25B which are two constituents of facing unit 25. That is, two power transmission paths are defined at both (opposite) sides of the flange portion. In contrast, in the structure of the present embodiment, the power transmission path is defined only in the direction from the flange portion 124B towards the driving unit 10. Therefore, the sliding torque can be easily determined and the motive power from the armature 13 can be directly and easily transmitted via base 540 to the limiter plate.

Fig. 5 is a sectional view showing the structure of the torque limiter as a variation of the above embodiment, and parts identical to those in Fig. 1 are given identical reference numerals, and explanations thereof are omitted.

In Fig. 5, in edge 500A of case 500, step portion 500B for positioning facing material 510 is provided. Accordingly, a portion of the outer-peripheral face of the facing material 510, as well as a face (of material 510) contacting the edge 500A, contact case 500, and this arrangement is effective for stably positioning the facing material 510.

In this variation, the facing material 510 is positioned at the step portion 500B without using an adhesive. In this case, the coefficient of friction between the facing material 510 and the case 500 is set to be higher than that between the facing material 510 and the flange portion 124B. Therefore, every time a sliding torque is applied, the facing material slides at the flange 124B side so that a sliding operation similar to that performed in the arrangement of Fig. 1 is performed while the sliding material 520 and the flange portion 124B contact each other. Accordingly, a process for bonding facing material 510 to the case 500 can be omitted.

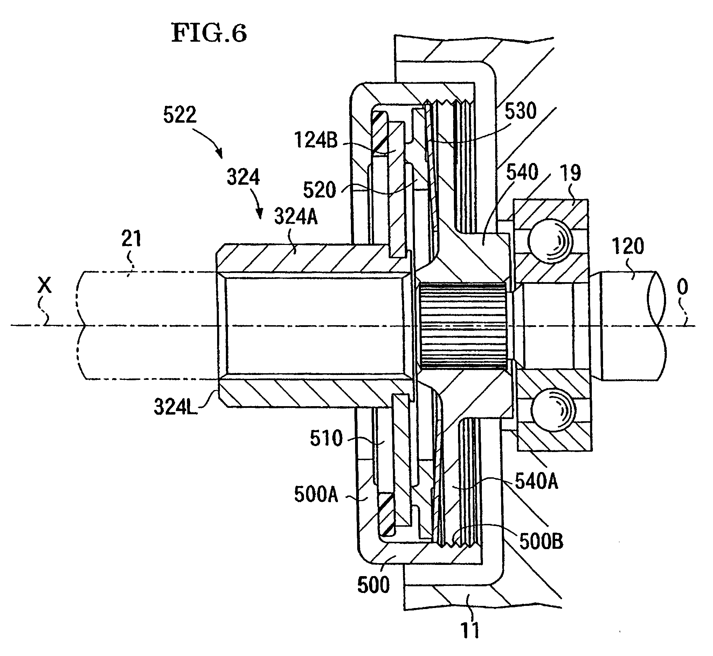

Fig. 6 is a sectional view showing the structure of the torque limiter as another variation of the above embodiment, and parts identical to those in Fig. 1 are given identical reference numerals, and explanations thereof are omitted.

In this variation, the disk-shaped sliding material 520, which contacts the flange portion 124B of limiter plate 324, does not have a curved surface and does not contact the flange portion on a curvilinear locus as shown in Fig. 1, but has a shape as shown in Fig. 6 so that a doughnut-shaped plane of the sliding material 520 contacts the flange portion 124B. Therefore, the pressure on the sliding material 520 is much dispersed in comparison with the above contact situation having the curvilinear locus. Accordingly, the structure of this variation is advantageous for improving the durability of the sliding material 520.

Additionally, in this variation, grooves are threaded on the outer-peripheral area of disk-shaped portion 540A of base 500, and grooves are also threaded on the corresponding inner-peripheral area of case 500 (see reference numeral 500B). The base 540 is attached to case 500 by screwing the base into the case, and the sliding friction is determined by adjusting the number of turns of the base. The above combined portion is further clamped from the outside of the case so as to crush the relevant grooves and certainly fix the portion.

## Claims

1. A power steering system in which an output shaft (120) of a driving unit and an input shaft (21) of a steering unit are coupled via a torque limiter (522), the torque limiter comprising:
a cylindrical case (500);
a base (540), combined with the case, having an axial hole into which the output shaft is pressed and inserted;
a rotated member (324) which is rotatable together with the input shaft; and
a forcing member (530, 250), for generating a pressing force due to friction, **characterised in that** the forcing member (530) is provided between the base and the rotated member and that the torque limiter is combined with the driving unit by pressing and inserting the output shaft into the axial hole of the base.

2. A power steering system as claimed in claim 1, **characterized in that**:
the base has a disk-shaped portion around the axial hole; and
the rotated member has a disk-shaped portion which faces the disk-shaped portion of the base via the forcing member.

3. A power steering system as claimed in claim 1, **characterized in that** the forcing member comprises a coned disk spring (530).

4. A power steering system as claimed in claim 3, **characterized in that** the forcing member further comprises a sliding material (520) which transmits a load received from the coned disk spring.

5. A power steering system as claimed in claim 4, **characterized in that** the sliding material has a coefficient of friction selected such that effects on the sliding torque can be ignored if grease enters from the input shaft side.

6. A power steering system as claimed in claim 4, **characterized in that** the sliding material is disk-shaped and has a curved surface, and the curved surface contacts the rotated member on a curvilinear locus.

7. A power steering system as claimed in claim 2, **characterized in that**:
the outer-peripheral area of the disk-shaped portion of the base has threaded grooves;
the corresponding inner-peripheral area of the case has threaded grooves; and
the base is attached to the case by screwing the base into the case so that both grooves of the base and case are engaged.

8. A power steering system as claimed in claim 2, **characterized in that** the end portion of the cylindrical case at the input shaft side has a disk-shaped portion, and a friction material is put between this disk-shaped portion and the disk-shaped portion of the rotated member.

9. A power steering system as claimed in claim 1, **characterized in that**:
the rotated member has a cylindrical portion into which the input shaft is inserted; and
the pressing and inserting operation of the output shaft into said cylindrical portion is performed by inserting a push pin from the end portion of the cylindrical portion at the input shaft side and pushing the base towards the output shaft side.

## Patentansprüche

1. Servolenksystem, bei dem eine Ausgangswelle (120) eine Antriebseinheit und eine Eingangswelle (21) eine Lenkeinheit über einen Drehmomentbegrenzer (522) verbunden sind, wobei der Drehmomentbegrenzer umfasst:
ein zylindrisches Gehäuse (500);
eine Basis (540), die mit dem Gehäuse kombiniert ist, die ein Axialloch aufweist, in das die Ausgangswelle gepresst und eingefügt ist;
ein Drehelement (324), das zusammen mit der Eingangswelle drehbar ist; und
ein Druck ausübendes Element (530, 250), zum Erzeugen einer Druckkraft aufgrund von Reibung, **dadurch gekennzeichnet, dass** das Druck ausübende Element (530) zwischen der Basis und dem Drehelement vorgesehen ist und dass der Drehmomentbegrenzer mit der Antriebseinheit durch Einpressen und Einfügen der Ausgangswelle in das Axialloch der Basis verbunden ist.

2. servolenksystem nach Anspruch 1, **dadurch gekennzeichnet, dass**
die Basis einen scheibenförmigen Bereich um das Axialloch aufweist; und
das Drehelement einen scheibenförmigen Bereich aufweist, der auf den scheibenförmigen Bereich der Sasis über das Druck ausübende Element gerichtet ist.

3. Servolenksystem nach Anspruch 1, **dadurch gekennzeichnet, dass** das Druck ausübende Element eine konusförmige Scheibenfeder (530) umfaest.

4. Servolenksystem nach Anspruch 3, **dadurch gekennzeichnet, dass** das Druck ausübende Element weiter ein Gleitmaterial (520) umfasst, das eine Last überträgt, die von der konusförmigen Scheibenfeder aufgenommen wird.

5. Servolenksystem nach Anspruch 4, **dadurch gekennzeichnet, dass** das Gleitmaterial einen Reibungskoeffizienten aufweist, der so gewählt ist, dass die Wirkungen des Gleitmoments ignoriert werden können, wenn Schmiermittel von der Seite der Eingangswelle eindringt.

6. Servolenksystem nach Anspruch 4, **dadurch gekennzeichnet, dass** das Gleitmaterial scheibenförmig ist und eine gekrümmte Oberfläche aufweist, und dass die gekrümmte Oberfläche das Drehelement entlang eines gekrümmten Orts berührt.

7. Servolenksystem nach Anspruch 2, **dadurch gekennzeichnet, dass** die äußere Umfangsfläche des scheibenförmigen Bereichs der Basis mit Gewinde versehene Nuten aufweist;
die entsprechende innere Umfangsfläche des Gehäuses mit Gewinde versehene Nuten aufweist; und
die Basis an dem Gehäuse durch Verschrauben der Basis in das Gehäuse befestigt ist, so dass beide Nuten der Basis und des Gehäuses in Eingriff gebracht sind.

8. Servolenksystem nach Anspruch 2, **dadurch gekennzeichnet, dass** der Endbereich des zylindrischen Gehäuses an der Seite der Eingangswelle einen scheibenförmigen Bereich aufweist und ein Reibungsmaterial zwischen diesen scheibenförmigen Bereich und den scheibenförmigen Bereich des Drehelements eingebracht ist.

9. Servolenksystem nach Anspruch 1, **dadurch gekennzeichnet, dass**
das Drehelement einen zylindrisches Bereich aufweist, in den die Eingangswelle eingefügt ist; und
das Einpressen und Einführen der Ausgangswelle in den zylindrischen Bereich ausgeführt wind, indem ein Druckstift von dem Endbereich des zylindrischen Bereichs an der Seite der Eingangswelle eingeführt wird und die Basis in Richtung auf die Seite der Ausgangswelle gedrückt wird.

## Revendications

1. Système de direction assistée dans lequel un arbre de sortie (120) d'une unité d'entraînement et un arbre d'entrée (21) d'une unité de direction sont couplés par l'intermédiaire d'un limiteur de couple (522), le limiteur de couple comprenant :
un boîtier cylindrique (500) ;
une base (540), combinée au boîtier, munie d'un trou axial dans lequel l'arbre de sortie est pressé et inséré ;
un élément rotatif (324) qui peut tourner avec l'arbre d'entrée ; et
un élément de pression (530, 250) destiné à générer une force de pression due au frottement, **caractérisé en ce que** l'élément de pression (530) est placé entre la base et l'élément rotatif et **en ce que** le limiteur de couple est combiné avec l'unité d'entraînement en pressant et en insérant l'arbre de sortie dans le trou axial de la base.

2. Système de direction assistée selon la revendication 1, **caractérisé en ce que** :
la base a une partie en forme de disque autour du trou axial ; et
l'élément rotatif a une partie en forme de disque qui fait face à la partie en forme de disque de la base via l'élément de pression.

3. Système de direction assistée selon la revendication 1, **caractérisé en ce que** l'élément de pression comprend un ressort Belleville conique (530).

4. Système de direction assistée selon la revendication 3, **caractérisé en ce que** l'élément de pression comprend en outre un matériau glissant (520) qui transmet une charge reçue depuis le ressort Belleville conique.

5. Système de direction assistée selon la revendication 4, **caractérisé en ce que** le matériau glissant a un coefficient de frottement choisi de façon que les effets sur le couple de glissement puissent être négligés si de la graisse pénètre depuis le côté arbre d'entrée.

6. Système de direction assistée selon la revendication 4, **caractérisé en ce que** le matériau glissant est en forme de disque et a une surface incurvée et **en ce que** la surface incurvée touche l'élément rotatif en un lieu curviligne.

7. Système de direction assistée selon la revendication 2, **caractérisé en ce que** :
la surface périphérique extérieure de la partie en forme de disque de la base comporte des rainures filetées ;
la surface périphérique intérieure correspondante du boîtier comporte des rainures filetées ; et
la base est fixée sur le boîtier en la vissant dans le boîtier afin que les rainures de la base et du boîtier s'engagent ensemble.

8. Système de direction assistée selon la revendication 2, **caractérisé en ce que** la partie d'extrémité du boîtier cylindrique du côté arbre d'entrée a une partie en forme de disque et une garniture de friction est placée entre cette partie en forme de disque et la partie en forme de disque de l'élément rotatif.

9. Système de direction assistée selon la revendication 1, **caractérisé en ce que** :
l'élément rotatif a une partie cylindrique dans laquelle l'arbre d'entrée est inséré ; et
l'opération de pression et d'insertion de l'arbre de sortie dans ladite partie cylindrique est exécutée en insérant un poussoir depuis la partie d'extrémité de la partie cylindrique du côté arbre d'entrée et en poussant la base vers le côté arbre de sortie.
